Europäisches Patentamt

European Patent Office

Office européen des brevets

(19)

(11) **EP 1 196 511 B1**

(12) **EUROPEAN PATENT SPECIFICATION**

(45) Date of publication and mention
of the grant of the patent:
**07.01.2004 Bulletin 2004/02**

(21) Application number: **99968244.6**

(22) Date of filing: **27.08.1999**

(51) Int Cl.$^7$: **C09J 153/02**, C08L 53/02

(86) International application number:
**PCT/EP1999/006336**

(87) International publication number:
**WO 2000/012645 (09.03.2000 Gazette 2000/10)**

(54) **HIGH PEEL STRENGTH HIGH HOLDING POWER HOT MELT DISPOSABLES ADHESIVE COMPOSITION**

SCHMELZKLEBSTOFFZUSAMMENSETZUNG MIT HOHEM ABSCHÄLWIDERSTAND UND HOHER TRAGKRAFT

COMPOSITION ADHESIVE THERMOFUSIBLE POSSEDANT UNE RESISTANCE AU DECOLLEMENT ET UNE FORCE D'ADHERENCE IMPORTANTES POUR PRODUITS JETABLES

(84) Designated Contracting States:
**DE FR GB IT**

(30) Priority: **27.08.1998 US 98114 P**

(43) Date of publication of application:
**17.04.2002 Bulletin 2002/16**

(73) Proprietor: **KRATON Polymers Research B.V.
1031 CM Amsterdam (NL)**

(72) Inventors:
• **KEGLEY, Larry, McArthur
League City, TX 77273 (US)**

• **SUGIYAMA, Shingo
Tokyo 135 (JP)**
• **TSUKAKOSHI, Nobuyuki
Tokyo 135 (JP)**

(74) Representative:
**Kortekaas, Marcellinus C. J. A. et al
KRATON Polymers Research B.V.,
P.O. Box 37666
1030 BH Amsterdam (NL)**

(56) References cited:
**WO-A-91/13935          WO-A-95/12645
WO-A-97/10310          US-A- 4 080 348
US-A- 4 101 482**

## Description

### Field of the Invention

The invention described herein relates to hot melt adhesive compositions which have high peel strength and high holding power as well as a low enough viscosity so that they can be applied without a solvent. More particularly, the invention relates to hot melt assembly adhesive compositions, especially adhesive compositions for assembly of disposable products.

### Background of the Invention

Block copolymers have been employed in adhesive compositions for many years (see eg WO 97/10310), primarily because of their high cohesive strengths and their ability to phase separate and form physical associations which act as crosslinks which are normally formed by chemical vulcanization. Block copolymers such as those described in U.S. Patent No. 3,239,478 are either linear or multiarm including radial or star styrene-butadiene-styrene (SBS) or styrene-isoprene-styrene (SIS) block copolymers. These polymers generally have high cohesive strength and can be readily tackified to yield good adhesive properties.

The use of many of these polymers in certain applications is limited because the viscosities of the polymers are too high for processing at relatively low temperatures (less than 175 °C). One solution to this problem has been to make the main polymer with a high percentage of uncoupled diblock arms, the molecular weights of which have been one half or higher of the molecular weight of the triblock polymer. Another solution was to add a separate diblock which had a high molecular weight. This lowers the viscosity somewhat but has the undesirable effect of lowering the tensile strengths of these polymers and adhesives produced with them.

Hot melt adhesives for assembly of disposable products (disposables assembly adhesives), such as disposable diapers and feminine care products were first based on atactic polypropylene, polyethylene, and/or ethylene vinyl acetate copolymers. In the 1970's development took place where SIS was used particularly in the leg and waist areas and then also in the chassis assembly. The trend since then has always been toward lower and lower melt viscosity so the hot melt adhesive could be processed at lower temperatures which in turn enables the disposables manufacturer to use thinner film in the disposables to lower the cost and improve the feel or comfort of the product.

The original styrene-diene products were based on KRATON D-1111 polymer (SIS) which at that time had a higher styrene content than the commercially available 15 percent styrene SIS polymers. Later, higher styrene content polymers such as STEREON 840 polymer (SBS) and KRATON D-1122 polymer (branched SBS) were used. (KRATON and STEREON are trade marks). The use of these high styrene products was driven by the desire to have a lower melt viscosity and lower processing temperature in disposables assembly. In the past, the lower limit on the operating temperature has been defined by the temperature at which the hot melt adhesive could be applied with sufficiently low viscosity for even and proper application. Such temperatures were in the range of 150 °C to 175 °C. In certain processing equipment, melt stability is particularly important. In this equipment, hydrogenated block copolymers (SEBS and SEPS) are used since they have better melt stability than unhydrogenated block copolymers.

U.S. Patent No. 5,119,226 provides an ultra-low viscosity disposables adhesive system which allows operation at from about 120 °C to about 150 °C. However, this adhesive is not acceptable for some higher quality uses because it has insufficient holding power to polyethylene which is the substrate of choice in most such applications.

Thus, it is clear that there is a need for a hot melt adhesive which is characterized by high peel strength and holding power to polyethylene as well as sufficiently low viscosity and melt stability for proper application in disposables to help prevent burn through of the polyethylene used in disposables assemblies. The present invention provides such a formulation.

### Summary of the Invention

The present invention provides a high peel strength and high holding power, low viscosity, hot melt adhesive composition which is especially suited for use in disposables and is consisting essentially of

    a) 100 parts by weight of a blend of:

        i) a linear block copolymer of the formula:


                    A-B-A-D and/or A-B-A

wherein A is a vinyl aromatic hydrocarbon polymer block having a weight average molecular weight of from 4000 to 35,000, B is a hydrogenated polydiene polymer block having a weight average molecular weight of from 20,000 to 200,000, D is a hydrogenated or unhydrogenated polydiene polymer block having a weight average molecular weight of from 3000 to 50,000, wherein the ratio of the molecular weight of D to the molecular weight of B is no more than 0.5, preferably no more than 0.2 and the copolymer has a vinyl aromatic hydrocarbon content of from 9 to 35 percent by weight: and

ii) an unhydrogenated vinyl aromatic hydrocarbon-diene diblock copolymer, preferably a styrene-isoprene or styrene-butadiene diblock copolymer, having a weight average molecular weight of 10,000 to 50,000 and a poly(vinyl aromatic hydrocarbon) content of from 10 to 40% by weight, wherein the diblock copolymer comprises from 10 to 35 % by weight of the blend, and

b) 100 to 275 parts by weight of a tackifying resin which is compatible with the diene blocks, and
c) 0 to 50 parts by weight of a plasticizer.

Most preferably, the unhydrogenated diblockcopolymer is a styrene-isoprene diblock copolymer.

In its preferred embodiment, the invention is the use of 15 to 30% by weight of the styrene-isoprene diblock polymer basis the blend with the four block copolymer, and 150 to 250 parts by weight of the tackifying resin described above to produce a low viscosity product which can be processed in the type of equipment presently in use by disposables manufacturers and still has sufficient peel strength and holding power for uses such as diaper assembly adhesives.

Detailed Description of the Invention

Polymers containing ethylenic unsaturation can be prepared by copolymerizing one or more olefins, particularly diolefins, by themselves or with one or more alkenyl aromatic hydrocarbon monomers. The blocks in the copolymers may, of course, be random, tapered, block or a combination of these, as well as linear, or multiarm including star or radial, but the four block and diblock polymers of this invention are linear.

The polymers containing ethylenic unsaturation or both aromatic and ethylenic unsaturation may be prepared using anionic initiators or polymerization catalysts. Such polymers may be prepared using bulk, solution or emulsion techniques. When polymerized to high molecular weight, the polymer containing at least ethylenic unsaturation will, generally, be recovered as a solid such as a crumb, a powder, a pellet or the like. When polymerized to low molecular weight, it may be recovered as a liquid. Polymers containing ethylenic unsaturation and polymers containing both aromatic and ethylenic unsaturation are available commercially from several suppliers.

In general, the polymers of this invention may be prepared by contacting the monomer or monomers with an organoalkali metal compound in a suitable solvent at a temperature in the range from -150 °C to 300 °C, preferably at a temperature in the range from 0 °C to 100 °C. Particularly effective polymerization initiators are organolithium compounds having the general formula:

RLi wherein R is an aliphatic, cycloaliphatic, alkyl-substituted cycloaliphatic, aromatic or alkyl-substituted aromatic hydrocarbon radical having from 1 to 20 carbon atoms.

Conjugated dienes which may be polymerized anionically include those conjugated diolefins containing from 4 to 24 carbon atoms such as 1,3-butadiene, isoprene, piperylene, methylpentadiene, phenyl-butadiene, 3,9-dimethyl-1,3-hexadiene, and 4,5-diethyl-1,3-octadiene. Isoprene is the preferred conjugated diene monomer for use in the present invention because the copolymers made from polyisoprene blocks have better peel strength than polymers made from polybutadiene blocks. Alkenyl (vinyl) aromatic hydrocarbons which may be copolymerized include vinyl aryl compounds such as styrene, various alkyl-substituted styrenes, alkoxy-substituted styrenes, vinyl naphthalene, and alkyl-substituted vinyl naphthalenes.

Suitable solvents include those useful in the solution polymerization of the polymer and include aliphatic, cycloaliphatic, alkyl-substituted cycloaliphatic, aromatic and alkyl-substituted aromatic hydrocarbons, ethers and mixtures thereof. Suitable solvents, then, include aliphatic hydrocarbons such as butane, pentane, hexane, and heptane, cycloaliphatic hydrocarbons such as cyclohexane, and cycloheptane, alkyl-substituted cycloaliphatic hydrocarbons such as methylcyclohexane, and methylcycloheptane, aromatic hydrocarbons such as benzene and the alkyl-substituted aromatic hydrocarbons such as toluene, and xylene and ethers such as tetrahydrofuran, diethylether, and di-n-butyl ether.

The block polymers of the present invention are linear in nature and may be produced by coupling or by sequential polymerization. Sequential polymerization basically involves first anionically polymerizing the A block, then anionically polymerizing the B block on the end thereof, then anionically polymerizing another A block on the end of that polymer, and finally polymerizing the D block.

In general, the method described is used to prepare coupled polymers with any polymer containing a reactive end group which will react with one or more functional groups contained in the selected coupling agent. The method is particularly suitable for the preparation of coupled polymers from so-called "living" polymers containing a single terminal metal ion. As is well known in the prior art, "living" polymers are polymers containing at least one active group such as a metal atom bonded directly to a carbon atom. "Living" polymers are readily prepared via anionic polymerization. Polymer arms can be first hydrogenated and then coupled so four block polymers with both hydrogenated and unhydrogenated diene blocks can be produced.

The four block polymers of the present invention should have a weight average molecular weight of from 30,000 to 150,000 because the tensile strength of the polymer will be insufficient to insure destructive tear rather than adhesive failure if the molecular weight is so low that the vinyl aromatic hydrocarbon block molecular weight is too low to form networks which add strength, or the tack will be insufficient if the vinyl aromatic hydrocarbon content is more than 50% and the viscosity will be too high if the molecular weight is higher than 150,000.

The midblock (B block) of the four block must be hydrogenated to achieve the desired thermal, ultraviolet, and viscosity stability. Preferably, it is a hydrogenated polybutadiene (EB) or polyisoprene (EP) block. The other polydiene block (D block) can be unhydrogenated or hydrogenated. Preferably, it is an unhydrogenated (B) or hydrogenated (EB) polybutadiene block or an unhydrogenated (I) or hydrogenated (EP) polyisoprene block. It is preferred that the D block be unhydrogenated isoprene (I) because such polymers have better tack, peel adhesion, and lower viscosity.

The preferred four block polymer is SEBSI where S represents polystyrene blocks. This polymer is preferred because it has the advantages of both the hydrogenated midblock (B), melt stability, etc., and the unhydrogenated D block described above. SEPSEP is also preferred. EP blocks give higher peel adhesion than EB blocks. The hydrogenated EP D block gives this polymer better peel adhesion, tack, and lower viscosity than SEPS block copolymers. Other preferred polymers are SEPSEB, SEBSEP, and SEBSEB.

The ratio of the molecular weight of the D block to that of the B block should not exceed 0.5 because having a bigger D block would decrease the holding power of the adhesive. Preferably, it should not exceed 0.2 because this gives the best balance of peel adhesion and holding power. Even at a ratio of 0.02, the polymer will exhibit improved properties.

The unhydrogenated diblock copolymers should have a weight average molecular weight of from 10,000 to 50,000, preferably 25,000 to 35,000, in order to keep the viscosity low but still have network (domain) formation which imparts sufficient strength to the adhesive. The diblock polymers are a much smaller component of the composition because of their affect on the peel strength and holding power. Their concentration may range from 10 to 35% by weight of the total polymer blend, preferably 15 to 30% by weight because this gives the best balance of adhesive properties, viscosity, and cost performance.

In some cases it may be desirable to add a relatively small amount of an A-B-A block copolymer, such as a hydrogenated styrene-butadiene-styrene block copolymer (SEBS) or a hydrogenated styrene-isoprene-styrene block copolymer (SEPS) to the polymer blend of this invention such as to increase the softening point of the adhesive. In this case, from 4 to 15% by weight of the block copolymer may be added. If this is done, then it is preferred that the amount of diblock copolymer in the blend range from 12 to 25% by weight of the blend because it maintains the balance of softening point and adhesive properties.

The tetrablock copolymers A-B-A-D and the triblock copolymers A-B-A should be hydrogenated in the midblock (B block) to provide the stability advantages characteristic of such polymers to the adhesive composition. These polymers can also be hydrogenated in the D block. Hydrogenation may be effected selectively as disclosed in U.S. Patent Reissue 27,145 which is herein incorporated by reference. The hydrogenation of these copolymers may be carried out by a variety of well established processes including hydrogenation in the presence of such catalysts as Raney Nickel, Noble metals such as platinum and palladium, soluble transition metal catalysts and titanium catalysts as in U.S. Patent No. 5,039,755 which is also incorporated by reference. The polymers may have different diene blocks and these diene blocks may be selectively hydrogenated as described in U.S. Patent No. 5,229,464 which is also herein incorporated by reference.

The unhydrogenated diblock (weight average molecular weight - 10,000 to 50,000) may instead be combined with hydrogenated triblocks such as SEBS or SEPS, preferably SEPS, of 50,000 to 200,000 weight average molecular weight and 9 to 35% by weight PSC. Such blends will have the melt stability advantages of the preferred blends and they can be used to make good low viscosity disposables adhesives. However, such blends cannot achieve the balance of holding power, peel strength, and viscosity that is possible with the four block polymers described above.

An adhesion promoting or tackifying resin that is compatible with the polymers should be used in the amount of from 100 to 275 parts by weight per hundred parts by weight (pbw) of polymer. In the composition of the present invention, the preferred concentration range of the tackifying resin is narrower, from 150 pbw to 250 pbw, most preferably 175 to 200, because this gives the best balance of viscosity, tack, and adhesion.

There are a wide variety of tackifying resins which are compatible with these polymer blends and thus may be used. Certain tackifiers are chosen depending upon the polymers used and the desire for more compatibility and stability. For example, hydrogenated tackifiers are sometimes more compatible with hydrogenated polymers than are the commonly used unhydrogenated tackifiers and the stability of the formulation increases as the level of unsaturation decreases. Compatible aromatic-modified aliphatic hydrocarbon resins, such as those described in U.S. 5,853,874, may also be used.

A common tackifying resin is a diene-olefin copolymer of piperylene and 2-methyl-2-butene having a softening point of about 95 °C. This resin is available commercially under the trade name WINGTACK 95 and is prepared by the cationic polymerization of 60% piperlene, 10% isoprene, 5% cyclopentadiene, 15% 2-methyl-2-butene and about 10% dimer, as taught in U.S. Patent No. 3,577,398. Other tackifying resins may be employed wherein the resinous copolymer comprises 20-80 weight percent of piperylene and 80-20 weight percent of 2-methyl-2-butene. The resins normally have ring and ball softening points as determined by ASTM method E28 between about 80 °C and 115 °C.

Other adhesion promoting (tackifying) resins which are also useful in the compositions of this invention include hydrogenated rosins, esters of rosins, polyterpenes, terpenephenol resins and polymerized mixed olefins, lower softening point resins and liquid resins. An example of a liquid resin is ADTAC LV resin from Hercules (ADTAC is a trade mark). To obtain good thermooxidative and color stability, it is preferred that the tackifying resin be a saturated resin, e.g., a hydrogenated dicyclopentadiene resin such as ESCOREZ 5000 series resin made by Exxon or a hydrogenated polystyrene or polyalphamethylstyrene resin such as REGALREZ resin made by Hercules (ESCOREZ AND REGALREZ are trade marks). Softening points of solid resins may be from about 40 °C to about 120 °C. Liquid resins, i.e., softening points less than room temperature, may be used as well as combinations of solid and liquid resins.

A composition of the present invention may contain plasticizers, such as rubber extending oils or compounding oils, or organic or inorganic pigments and dyes. Plasticizers are well-known in the art and include both high saturates content oils and naphthenic oils. Preferred plasticizers are highly saturated oils, e.g. TUFFLO 6056 and 6204 oil and naphthenic process oils, e.g. SHELLFLEX 371 oil (TUFFLO and SHELLFLEX are trade marks). The amounts of plasticizer employed in the invention composition can vary from 0 to 80 pbw, preferably from 0 to 65 pbw, more preferably up to 50 pbw. If present, the amount of plasticizer is preferably at least 5 pbw.

Optional components of the present invention are stabilizers which inhibit or retard heat degradation, oxidation, skin formation and color formation. Stabilizers are typically added to the commercially available compounds in order to protect the polymers against heat degradation and oxidation during the preparation, use and high temperature storage of the composition. Combinations of primary and secondary antioxidants are preferred. Such combinations include sterically hindered phenolics with phosphites or thioethers, such as hydroxyphenylpropionates with aryl phosphates or thioethers, or amino phenols with aryl phosphates. Specific examples of useful antioxidant combinations include 3-(3,5-di-t-butyl-4-hydroxyphenyl)-propionate)methane (IRGANOX 1010 from Ciba-Geigy) with tris(nonylphenyl)-phosphite (POLYGARD HR from Uniroyal), IRGANOX 1010 with bis(2,4-di-t-butyl)pentaerythritol diphosphite (ULTRANOX 626 from Borg-Warner) (IRGANOX, POLYGARD and ULTRANOX are trade marks).

All compositions based on the polymers of this invention will contain some combination of the various formulating ingredients disclosed herein. No definite rules can be offered about which ingredients will be used. The skilled formulator will choose particular types of ingredients and adjust their concentrations to give exactly the combination of properties needed in the composition for any specific adhesive formulation. A formulator skilled in the art will see tremendous versatility in the polymers of this invention to prepare adhesives for disposables.

The adhesive compositions of the present invention can be prepared by blending the components at an elevated temperature, preferably between 50 °C and about 200 °C, until a homogeneous blend is obtained, usually less than three (3) hours. Various methods of blending are known to the art and any method that produces a homogenous blend is satisfactory. The resultant compositions may then be used in a wide variety of applications. Alternatively, the ingredients may be blended into a solvent.

There are several advantages of using lower viscosity polymers in hot melt adhesives. First, the lower viscosity allows for easier processing, lower heating (energy) requirements, lower processing temperatures which results in less degradation of the polymer during processing and allows the formulation to be applied in thinner layers or lower coat weight while avoiding the problem of burn through. Finally, and most important here, the polymers of the present invention are especially suitable for disposables adhesives because of their unusual combination of low viscosity, high peel strength and holding power, and adhesive properties. They may also be used as heat sealing adhesives since they will heat seal at much lower temperatures than the currently available adhesives.

The resultant adhesives may then preferably be used in a wide variety of disposables assembly applications. One of the most important applications for this adhesive is in the manufacture of disposable diapers although it is also highly advantageous in the manufacture of feminine care products. A particularly preferred application is their use in bonding polyethylene or polypropylene substrates to tissue, non-wovens or other polyethylene or polypropylene substrates using techniques involving multiple dispositions of small quantities of the adhesives according to conventional "multi-line" or "multi-dot" type constructions. Although the procedures used to manufacture these disposable constructions vary depending upon the particular manufacturer, the adhesive is generally extruded in lines (or dots) at regularly spaced intervals along the length of the article. The adhesive may be applied at temperatures as low as 140 °C. An additional advantage of the adhesive of the present invention is that it can be effectively applied by spraying. The adhesive is usually applied to the polyethylene or polypropylene backing and subsequently the combination is mated with an absorbent inner core and tissue or non-woven liner.

EXAMPLE

Holding Power is the time required to pull a standard area (2.5 cm x 2.5 cm) of tape with 50 μm of adhesive and 25 μm polyester backing from a standard test surface (polyethylene) under a standard load, 2 kg with 2° angle. Long times indicate high adhesive strength. Peel strength was determined by 180° peel test at 300 mm/min. (Pressure Sensitive Tape Council Method No. 1). Large numbers indicate high strength when peeling a test tape from a 1 mm high density polyethylene substrate. Probe tack (PPT) was determined by a Polyken probe tack tester with a dewell time of 0.1 seconds and a rate of 1 cm/sec (ASTM D-2979). High numbers indicate aggressive tack.

Polymer PP5852 was a blend of 66 percent by weight of a coupled hydrogenated SEBS block copolymer having a weight average molecular weight of 47,500 containing 70% by weight of uncoupled SEB diblock polymer; 5.7 percent by weight of a hydrogenated SEBS block copolymer having a 50,000 weight average molecular weight and a polystyrene content of 30 percent by weight; and 28.3 percent of a styrene-isoprene block copolymer having a weight average molecular weight of 30,000 and a polystyrene content of 15 percent by weight. Polymer blend A is a blend of an SEPS polymer with a weight average molecular weight of 90,000 and a PSC of 18.7% by weight with the SI diblock. SEPTON 2063 polymer is a hydrogenated block copolymer of uncertain composition but having S and EP blocks, a weight average molecular weight of more than 100,000, and a polystyrene content of 13% by weight (SEPTON is a trade mark). It is currently used commercially in disposables. Polymer blends D, D2, and D3 are blends of a four block polymer of the present invention which has a weight average molecular weight of 93,000 and a polystyrene content of 21% by weight, and the styrene-isoprene diblock copolymer described above. The four block polymer is S-EP-S-EP with block weight average molecular weights of 6700-50,000-6700-8000 (D/B molecular weight ratio = 0.4) and a PSC of 20.5% by weight. Polymer blend B is a blend of the afore-mentioned four block (74%wt) and diblock (19%wt) polymers with 7%wt of an SEBS polymer having a weight average molecular weight of 67,000 and a PSC of 30% by weight. ARKON P100 tackifying resin is a hydrogenated aromatic hydrocarbon tackifying resin (ARKON is a trade mark). PW 90 oil is a paraffinic process oil. IR 1010 is IRGANOX 1010 antioxidant which is commonly used for polymers.

A number of formulations using the above polymers were made. The formulations are described in Table 1 below. The adhesive properties of these formulations were determined. These properties are also shown in Table 1 below. It can clearly be seen that the polymers of the present invention, PP5852, A, B, D, D2, and D3 give superior peel strength and holding power, while maintaining an acceptable melt viscosity, then the comparative polymer SEPTON 2063 Polymer. According to a preferred embodiment, the total amount of unhydrogenated diblock copolymer and any blended in or uncoupled hydrogenated diblock copolymer is not more than 50% by weight of the total block copolymer blend; more preferably not more than 40% by weight. According to a particularly preferred embodiment the unhydrogenated diblock copolymer is substantially the only diblock copolymer in the block copolymer blend.

It can be seen that the preferred polymer blends of the invention A, B, D, D2 and D3 give superior peel strength and holding power, while maintaining an acceptable melt viscosity, than polymer blend PP5852. The blends with the tetrablock copolymer B, D, D2 and D3 are the most preferred because they give a higher holding power of lower viscosity than polymer blend A which does not contain the tetrablock copolymer, but a SEPS triblock copolymer.

EP 1 196 511 B1

Table 1

| | | PP5852 | SEPTON 2063 | SEPTON 2063 | A | D-3 | D | D2 | B |
|---|---|---|---|---|---|---|---|---|---|
| Sample Description | | | | | | | | | |
| | wt% Triblock + Four block | 25.5 | 40 | 40 | 80 | 70 | 80 | 75 | 81.0 |
| | wt% Diblock | 74.5[2)] | 60[1)] | 60[1)] | 20 | 30 | 20 | 25 | 19.0 |
| Formulation | % Polymer | 30 | 30 | 25 | 30 | 25 | 25 | 25 | 25 |
| | % Tackifier (ARKON P100) | 60 | 60 | 65 | 60 | 65 | 65 | 65 | 60[3)] |
| | % Process Oil (PW90) | 10 | 10 | 10 | 10 | 10 | 10 | 10 | 15 |
| | % Antioxidant (IR1010) | 0.5 | 0.5 | 0.5 | 0.5 | 0.5 | 0.5 | 0.5 | 0.5 |
| Adhesive Properties | Melt viscosity at 180 °C (cps) | 820 | 12,700 | 4400 | 5000 | <3000 | 3000 | <3000 | 3600 |
| | Peel strength to HDPE (g/25 mm) | 1300 | 2100 | 1300 | 3000 | 1400 | 1500 | 2200 | 2500 |
| | Probe Tack (g) | 300 | 850 | 60 | 450 | 50 | 20 | 30 | 1200 |
| | Holding Power (hrs) | 150 | 1.1 | 1.2 | >150 | >400 | >400 | >400 | >200 |

1) Hydrogenated uncoupled SEB diblock copolymer.

2) Total unsaturated styrene-isoprene diblock content is 28.5% by weight.

3) ESCOREZ 5300 hydrogenated dicyclopentadiene tackifying resin was used (ESCOREZ and ARKON are trade marks).

**Claims**

1.  A hot melt adhesive composition consisting essentially of:

    a) 100 parts by weight of a blend of:

    i) a linear block copolymer of the formula:

    A-B-A-D and/or A-B-A

    wherein A is a vinyl aromatic hydrocarbon polymer block having a weight average molecular weight of from 4000 to 35,000, B is a hydrogenated polydiene polymer block having a weight average molecular weight of from 20,000 to 200,000, D is a hydrogenated or unhydrogenated polydiene polymer block having a weight average molecular weight of from 3000 to 50,000, wherein the ratio of the molecular weight of D to the molecular weight of B is no more than 0.5 and the copolymer has a vinyl aromatic hydrocarbon content of from 9 to 35 percent by weight; and
    ii) an unhydrogenated vinyl aromatic hydrocarbon-diene diblock copolymer having a weight average molecular weight of 10,000 to 50,000 and a poly (vinyl aromatic hydrocarbon) content of from 10 to 40% by weight, wherein the diblock copolymer comprises from 10 to 35 % by weight of the blend, and

    b) 100 to 275 parts by weight of a tackifying resin which is compatible with the diene blocks, and
    c) 0 to 80 parts by weight of a plasticizer.

2.  Adhesive composition according to claim 1, wherein the diblock copolymer comprises from 15 to 30 % by weight of the polymer blend.

3.  Adhesive composition according to claim 2, wherein the amount of diblock copolymer in the polymer blend ranges from 12 to 25% by weight of the blend.

4.  Adhesive composition according to any one of claims 1-3, wherein the diblock copolymer is a styrene-isoprene or styrene-butadiene diblock copolymer.

5.  Adhesive composition according to claim 4, wherein the diblock copolymer is a styrene-isoprene diblock copolymer.

6.  Adhesive composition according to any one of the preceding claims, wherein the linear block copolymer is of the formula A-B-A-D.

7.  Adhesive composition of claim 6, wherein the molecular weight ratio of D to B is no more than 0.2.

8.  Adhesive composition according to any one of claims 1 to 5, wherein the linear block copolymer comprises a blend of A-B-A-D an A-B-A block copolymers wherein the A-B-A block copolymer is present in an amount from 4 to 15% by weight of the blend.

9.  Adhesive composition according to any one of claims 1 to 5, wherein the linear block copolymer is of the formula A-B-A.

10. Adhesive composition according to any one of the preceding claims, wherein the linear block copolymer the B block is a hydrogenated polybutadiene polymer block and the D block, if present, is an unhydrogenated polyisoprene polymer block.

11. A linear block copolymer of the formula:

    A-B-A-D

    wherein A is a vinyl aromatic hydrocarbon polymer block having a weight average molecular weight of from 4000 to 35,000, B is a hydrogenated polybutadiene polymer block having a weight average molecular weight of from 20,000 to 200,000, D is an unhydrogenated polyisoprene polymer block having a weight average molecular weight of from 3000 to 50,000, wherein the ratio of the molecular weight of D to the molecular weight of B is no more than 0.5 and the copolymer has a vinyl aromatic hydrocarbon content of from 9 to 35 percent by weight.

**12.** The copolymer of claim 11 wherein the molecular weight ratio of D to B is no more than 0.2.

**Patentansprüche**

**1.** Schmelzklebstoffzusammensetzung bestehend im Wesentlichen aus

    a) 100 Gewichtsteilen einer Mischung aus:

        i) einem linearen Blockcopolymer der Formel:

<div align="center">A-B-A-D und/oder A-B-A</div>

        wobei A ein vinylaromatischer Kohlenwasserstoffpolymerblock ist, der ein massengemitteltes Molekulargewicht von 4000 bis 35000 aufweist, B ein hydrierter Polydienpolymerblock ist, der ein massengemitteltes Molekulargewicht von 20000 bis 200000 aufweist, D ein hydrierter oder nicht hydrierter Polydienpolymerblock ist, der ein massengemitteltes Molekulargewicht von 3000 bis 50000 aufweist und wobei das Verhältnis des Molekulargewichts von D zum Molekulargewicht von B nicht mehr als 0,5 beträgt und das Copolymer einen Gehalt an vinylaromatischem Kohlenwasserstoff von 9 bis 35 Gewichts-% aufweist; und

        ii) ein nicht hydriertes vinylaromatisches Kohlenwasserstoff-Dien-Diblockcopolymer ist, das ein massengemitteltes Molekulargewicht von 10000 bis 50000 aufweist und einen Gehalt an polyvinylaromatischem Kohlenwasserstoff von 10 bis 40 Gewichts-%, und wobei das Diblockcopolymer 10 bis 35 Gewichts-% der Mischung umfasst, und

    b) 100 bis 275 Gewichtsteile eines Harzes zur Erhöhung der Klebrigkeit, das mit den Dienblöcken kompatibel ist, und

    c) 0 bis 80 Gewichtsteile eines Weichmachers.

**2.** Klebstoffzusammensetzung nach Anspruch 1, wobei das Diblockcopolymer 15 bis 30 Gewichts-% der Polymermischung umfasst.

**3.** Klebstoffzusammensetzung nach Anspruch 2, wobei die Menge des Diblockcopolymers in der Polymermischung im Bereich von 12 bis 25 Gewichts-% der Mischung liegt.

**4.** Klebstoffzusammensetzung nach einem der Ansprüche 1 bis 3, wobei das Diblockcopolymer ein Styrol-Isopren oder Styrol-Butadien-Diblockcopolymer ist.

**5.** Klebstoffzusammensetzung nach Anspruch 4, wobei das Diblockcopolymer ein Styrol-Isopren-Diblockcopolymer ist.

**6.** Klebstoffzusammensetzung nach einem der vorhergehenden Ansprüche, wobei das lineare Blockcopolymer die Formel A-B-A-D aufweist.

**7.** Klebstoffzusammensetzung nach Anspruch 6, wobei das Molekulargewichtsverhältnis von D zu B nicht mehr als 0,2 beträgt.

**8.** Klebstoffzusammensetzung nach einem der Ansprüche 1 bis 5, wobei das lineare Blockcopolymer eine Mischung aus A-B-A-D und A-B-A Blockcopolymeren umfasst und wobei das A-B-A Blockcopolymer in einer Menge von 4 bis 15 Gewichts-% in der Mischung vorhanden ist.

**9.** Klebstoffzusammensetzung nach einem der Ansprüche 1 bis 5, wobei das lineare Blockcopolymer die Formel A-B-A aufweist.

10. Klebstoffzusammensetzung nach einem der vorhergehenden Ansprüche, wobei das lineare Blockcopolymer des B Blocks ein hydrierter Polybutadienpolymerblock ist und der D Block, sofern vorhanden, ein nicht hydrierter Polyisoprenpolymerblock ist.

11. Lineares Blockcopolymer der Formel:

A-B-A-D

wobei A ein vinylaromatischer Kohlenwasserstoffpolymerblock ist, der ein massengemitteltes Molekulargewicht von 4000 bis 35000 aufweist, B ein hydrierter Polybutadienpolymerblock ist, der ein massengemitteltes Molekulargewicht von 20000 bis 200000 aufweist, D ein nicht hydrierter Polyisoprenpolymerblock ist, der ein massengemitteltes Molekulargewicht von 3000 bis 50000 aufweist und wobei das Verhältnis des Molekulargewichts von D zum Molekulargewicht von B nicht mehr als 0,5 beträgt und das Copolymer einen Gehalt an vinylaromatischen Kohlenwasserstoffen von 9 bis 35 Gewichts-% aufweist.

12. Copolymer nach Anspruch 11, wobei das Molekulargewichtsverhältnis von D zu B nicht mehr als 0,2 beträgt.

**Revendications**

1. Composition d'adhésif thermofusible se composant essentiellement de :

a) 100 parties en poids d'un mélange :

i) d'un copolymère bloc linéaire de la formule :

A-B-A-D et/ou A-B-A

dans laquelle A est un bloc de polymère d'hydrocarbure vinyl aromatique ayant un poids moléculaire moyen pondéral de 4.000 à 35.000, B est un bloc de polymère de polydiène hydrogéné ayant un poids moléculaire moyen pondéral de 20.000 à 200.000, D est un bloc de polymère de polydiène hydrogéné ou non hydrogéné ayant un poids moléculaire moyen pondéral de 3.000 à 50.000, dans lequel le rapport du poids moléculaire de D au poids moléculaire de B n'est pas supérieur à 0,5 et le copolymère a une teneur en hydrocarbure vinyl aromatique de 9 à 35 % en poids; et
ii) d'un copolymère dibloc d'hydrocarbure vinyl aromatique-diène non hydrogéné ayant un poids moléculaire moyen pondéral de 10.000 à 50.000 et une teneur en poly(hydrocarbure vinyl aromatique) de 10 à 40 % en poids, dans lequel le copolymère dibloc constitue de 10 à 35 % en poids du mélange, et

b) 100 à 275 parties en poids d'une résine assurant un collage qui est compatible avec les blocs de diène, et
c) 0 à 80 parties en poids d'un plastifiant.

2. Composition d'adhésif suivant la revendication 1, dans laquelle le copolymère dibloc constitue de 15 à 30 % en poids du mélange de polymères.

3. Composition d'adhésif suivant la revendication 2, dans laquelle la quantité de copolymère dibloc dans le mélange de polymères constitue de 12 à 25 % en poids du mélange.

4. Composition d'adhésif suivant l'une quelconque des revendications 1 à 3, dans laquelle le copolymère dibloc est un copolymère dibloc de styrène-isoprène ou de styrène-butadiène.

5. Composition d'adhésif suivant la revendication 4, dans laquelle le copolymère dibloc est un copolymère dibloc de styrène-isoprène.

6. Composition d'adhésif suivant l'une quelconque des revendications précédentes, dans laquelle le copolymère bloc linéaire est de la formule A-B-A-D.

7. Composition d'adhésif suivant la revendication 6, dans laquelle le rapport en poids moléculaire de D à B n'est pas supérieur à 0,2.

8. Composition d'adhésif suivant l'une quelconque des revendications 1 à 5, dans laquelle le copolymère bloc linéaire comprend un mélange de copolymères blocs A-B-A-D et A-B-A dans lequel le copolymère bloc A-B-A est présent en une quantité de 4 à 15 % en poids du mélange.

9. Composition d'adhésif suivant l'une quelconque des revendications 1 à 5, dans laquelle le copolymère bloc linéaire est de la formule A-B-A.

10. Composition d'adhésif suivant l'une quelconque des revendications précédentes, dans laquelle le bloc B du copolymère bloc linéaire est un bloc de polymère de polybutadiène hydrogéné et le bloc D, si présent, est un bloc de polymère de polyisoprène non hydrogéné.

11. Copolymère bloc linéaire de la formule :

A-B-A-D

dans laquelle A est un bloc de polymère d'hydrocarbure vinyl aromatique ayant un poids moléculaire moyen pondéral de 4.000 à 35.000, B est un bloc de polymère de polybutadiène hydrogéné ayant un poids moléculaire moyen pondéral de 20.000 à 200.000, D est un bloc de polymère de polyisoprène non hydrogéné ayant un poids moléculaire moyen pondéral de 3.000 à 50.000, dans lequel le rapport du poids moléculaire de D au poids moléculaire de B n'est pas supérieur à 0,5 et le copolymère a une teneur en hydrocarbure vinyl aromatique de 9 à 35 % en poids.

12. Copolymère suivant la revendication 11, dans lequel le rapport des poids moléculaires de D à B n'est pas supérieur à 0,2.